# EUROPEAN PATENT SPECIFICATION

(11) **EP 3 117 579 B1**
(45) Date of publication and mention of the grant of the patent: **24.01.2018**
(21) Application number: 15709669.4
(22) Date of filing: 11.03.2015
(51) Int. Cl.: H04L 29/06, H04N 7/16, H04W 4/20, H04N 21/80, H04W 4/14, H04W 4/18, H04W 88/06, H04W 84/04

(54) **A METHOD AND SYSTEM TO CREATE A SECURE COMMUNICATION CHANNEL BETWEEN TWO SECURITY MODULES**
VERFAHREN UND SYSTEM ZUR ERZEUGUNG EINES SICHEREN KOMMUNIKATIONSKANALS ZWISCHEN ZWEI SICHERHEITSMODULEN
PROCÉDÉ ET SYSTÈME POUR CRÉER UN CANAL DE COMMUNICATION SÉCURISÉE ENTRE DEUX MODULES DE SÉCURITÉ

(30) Priority: 11.03.2014 US 201414205209
(43) Date of publication of application: 18.01.2017
(73) Proprietor: Nagravision S.A., 1033 Cheseaux-sur-Lausanne (CH)
(72) Inventor: MELIA, Telemaco, CH-1180 Rolle (CH); SARDA, Pierre, CH-1040 Echallens (CH)
(74) Representative: Leman Consulting S.A.
(86) International application number: PCT/EP2015/055076
(87) International publication number: WO 2015/135991

(56) References cited:
- US-A1- 2004 098 592
- US-A1- 2012 246 480
- NEEDHAM R M ET AL: "Using encryption for authentication in large networks of computers", COMMUNICATIONS OF THE ACM, ASSOCIATION FOR COMPUTING MACHINERY, vol. 21, no. 12, December 1978 (1978-12), pages 993-999, XP002163714, ISSN: 0001-0782, DOI: 10.1145/359657.359659

## Description

### BACKGROUND

This document relates to secure electronic communication and controlling physical access to a communication network.

Users of satellite services receive multimedia content over a satellite downlink. Some conventional satellite networks were one-way because there did not exist a way for users to communicate back via a two-way communication network to the satellite network. Recent advances in wireless technologies, e.g., 3G and 4G cellular wireless technologies, have made it possible to provide a wireless communication channel via which satellite television users can communicate with the satellite network.

### SUMMARY

The present document discloses techniques for secure pairing of two different security modules (e.g., a smartcard) that are operable in two different networks for a paired use. In some implementations, a smartcard, e.g., as used in digital cable or satellite television networks, and a Subscriber Identity Module (SIM) card, e.g., as used in cellular telephone network, are deployed at a user premise and are securely paired together so that the SIM card can be used for wireless communication only as long as it remains paired with the smartcard.

In one aspect, a method is provided for controlling operation of a first security module operable in a first communication network by a second security module operable in a second communication network. The method includes sending an initialization message from the first communication network to the second communication network, the initialization message uniquely identifying the first security module, generating a secret based on the initialization message, communicating the secret to the first security module via the first communication network, transmitting the secret to the second security module via the second communication network; and establishing, using the secret, a secure channel between the second security module and the first security module via a third communication link that is different from the first communication network and the second communication network.

In another aspect, an apparatus for operation in a communication system is disclosed. The apparatus includes a module that sends an initialization message to an application server via a wireless communication network, a module that receives a secret that was generated based on an identity included in the initialization message, a module that establishes a secure communication channel over a home area communication link, and a module that sends an acknowledgement message via the wireless communication network, indicating successful establishment of the secure communication channel.

These, and other, aspects are described below in the drawings, the description and the claims.

### BRIEF DESCRIPTION OF THE DRAWINGS

FIG. 1 illustrates an example of a communication system.
FIG. 2 is a block diagram representation of an example of data flow in a communication network.

### DETAILED DESCRIPTION

With recent advances in digital communication technologies, some traditional communication networks are now being complemented by additional ways to provide data to users and receive data from users. In many locations, e.g., user homes or businesses or public places such as shops and airports, a user may have multiple possibilities to connect to a network such as the Internet. For example, in a user's home, a user may be able to receive audio/video programs and data via a satellite or a cable network. At the same time, a user may be able to receive audio/video programs and data via a wireless cellular network such as a 3G or a 4G network. Similarly, in an airport, a user may be able to establish data connectivity using her cellular data network and/or using a wireless hotspot or a Wi-Fi network.

As another example, some satellite television programming providers may want to complement their satellite communication network with a cellular network to provide an additional way to provide data/content connectivity to user premises. Making available such two-network connectivity may benefit both the users and the network service providers by providing opportunities to provide additional content and services, a reverse channel on which users can communicate with the network, and the possibility of reduced monthly bill for a user by consolidating communication services, among others. As a consequence, a multimedia content can be sent through the one-way satellite network to a receiver and a value-added content, related to the multimedia content can be sent through the cellular network. While enjoying a multimedia content, the user can activate enhanced function such as hyperlink in the metadata of the multimedia content. The hyperlink will be passed through the secure channel to the cellular receiver (LTE Router for example) and then routed to the CAS Head-end via the Mobile Management Entity. The CAD Head-end can prepare a value added content and transmit it via the cellular network up to the STB.

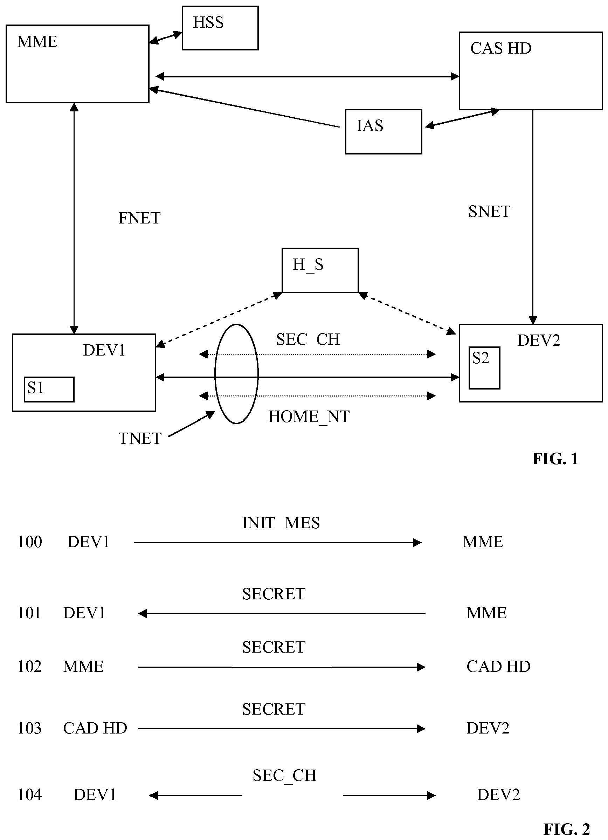

Figure 1 illustrates an example of a communication system. A broadcast system (CAS HD) may provide content via a satellite link SNET to a user premise DEV2. The satellite signal from the satellite SNET may be received via a roof-top antenna, e.g., a dish antenna. The user premise may be equipped with a set-top box or a receiver DEV2 to receive the satellite content carried within the received satellite signal. The receiver DEV2 may include a decryption subsystem that uses a smartcard SC to provide conditional access to various television programs being transmitted over the satellite link SNET. It is to be noted that the first security module S1 and the second security module S2 include decryption keys used for decrypting data using different decryption technologies. Additionally, the first security module and the second security module provide different physical form factors and security.

The user premise may also be fitted with a second antenna system based on a second wireless communication link FNET different from the satellite link SNET. The second antenna system DEV1 may, e.g., include Long Term Evolution (LTE) transmission/reception and router capability to provide Internet connection by communication with an LTE network FENT. The LTE network FNET may include a base station, called enhanced node B (eNB), which controls wireless communication in a macro cell. The eNB may communicate with network infrastructure such as evolved packet core EPC to provide connectivity to the internet and other telephony services. Satellite content that is transported over the satellite network FNET, which forms the backbone network for a satellite service provider, may also be available to the EPC (e.g., for fulfilling two-way interactivity by the user).

The LTE router or device Devl may be equipped with a security module (S1) such as the Universal Integrated Circuit Card (UICC), which may be provisioned by the mobile operator (or by the UICC provider). For the rest of the description, the security module will be identified by SIM, UICC or S1 and refer to the security module located into the first device DEV1. The UICC may provide parameters and credentials, e.g., the International Mobile Subscriber Identity (IMSI) and the authentication key (Ki), used to identify and authenticate the subscriber to the cellular network. The LTE Router (or DEVI), as any other mobile device, is connected to a MME (Mobile Management Entity).The MME identifies and authenticates the security module (S1) of the LTE Router. The LTE Router is additionally located via the nearest mobile antenna.

Since the LTE router may be an outdoor unit, with the UICC also located outside a user's home, preventing malicious attacks might be difficult (e.g. during night time). Cloning of the UICC (or of the parameters contained in the UICC) could result in fraudulent use of the system or event UICC sold to the black market. This would have a direct negative impact on the service provided by the network operator to the user.

The present document provides, *inter alia,* techniques for secure pairing of the UICC, also called LTE USIM (universal subscriber identity module) card with the smartcard module/secured environment in the satellite set-top box connected to a broadcast channel. The present invention concerns a method and a system as defined in the claims.

In some embodiments, the existing and highly secured channel satellite link SEC_CH is used to establish a secured pairing between the UICC and the smartcard (S2). Such pairing, in one aspect, prevents theft of service by a malicious attacker by copying or stealing the UICC and using it for other purposes, for instance by inserting in a 4G enabled smart phone. In another aspect, the pairing may also prevent a user from plugging the UICC in his/her personal mobile phone to get 4G wireless connection while on the move, if not permitted by the network service provider to do so. For example, in deployments where the antenna system 112 is used in a fixed wireless access network, eNBs may be configured with parameters to meet a certain capacity requirement under the assumption that the UICC card is not mobile. In such systems, a user's unauthorized movement of the UICC may lead to misconfigurations and degradation in the quality of service.

In some embodiments, a secure communication (SEC_CH) between 2 elements (here SIM Card and SC), may be established using a secret shared between both elements. In some embodiments, a secret may be created at the first management unit MME (e.g., satellite network infrastructure). This secret is then shared between the satellite network and the cellular network using a process such as described in this document. This secret is then used to create a secure channel SEC_CH between the LTE router (DEV1) and the set-top box (DEV2). The secret can be used as a key to encrypt the data exchanged between the LTE router and the set-top box or can be a base in a Diffie Helmann protocol such as :

The Diffie-Hellman protocol is a method for two computer users to generate a shared private key with which they can then exchange information across an insecure channel. Let the users be named Alice and Bob. First, they agree on two prime numbers g and p, where p is large (typically at least 512 bits) and g is a primitive root modulo p. (In practice, it is a good idea to choose p such that (p-1)/2 is also prime.) One of the p or g can be generated from the secret value. The numbers g and p need not be kept secret from other users. Now Alice chooses a large random number a as her private key and Bob similarly chooses a large number b. Alice then computes A=g^a (mod p), which she sends to Bob, and Bob computes B=g^b (mod p), which he sends to Alice.

Now both Alice and Bob compute their shared key K=g^(ab) (mod p), which Alice computes as K=B^a (mod p)=(g^b)^a (mod p)
and Bob computes as K=A^b (mod p)=(g^a)^b (mod p).

Alice and Bob can now use their shared key K to exchange information without worrying about other users obtaining this information. In order for a potential eavesdropper (Eve) to do so, she would first need to obtain K=g^(ab) (mod p) knowing only g, p, A=g^a (mod p) and B=g^b (mod p).

This can be done by computing a from A=g^a (mod p) and b from B=g^b (mod p). This is the discrete logarithm problem, which is computationally infeasible for large p. Computing the discrete logarithm of a number modulo p takes roughly the same amount of time as factoring the product of two primes the same size as p, which is what the security of the RSA cryptosystem relies on. Thus, the Diffie-Hellman protocol is roughly as secure as RSA.

Figure 1 is a block diagram representation of an example of a communication network established for pairing. The satellite set-top box (STB) DEV2 and the outdoor antenna unit DEV1 may be communicatively coupled to each other via a home local network (H_S) forming the third communication network TNET (e.g., a Wi-Fi network or a wired Ethernet network). An Ethernet switch (e.g., an access point) may be optionally used to facilitate home-network traffic. Two logical communication channels using the third communication channel (TNET) may be established between the STB DEV2 and the unit DEV1 - a secure logical channel SEC_CH and a second channel HOME_NT, e.g., an Ethernet communication channel. The secure channel SEC_CH may use secure communication that is secured using the SC (or S2) and SIM (or S1). The SIM card (or USIM, S1) is identified by the MME while the mobile device having the SIM card is connecting to the mobile network. The MME is connected with a home subscriber server (HSS) that provides credentials to an application server connected with the second management unit (CAS Head-end). The STB (DEV2) may receive satellite programming (i.e. broadcast channel) and the credentials for the unit SC over the satellite link SNET. Once pairing is achieved, value added content (e.g., advertisements, interactive data, program guide, etc.) may be successfully received over the cellular connection FNET and provided to the STB DEV2 to enhance user experience of content viewing via the secure channel SEC_CH. The Interactive Application Server (IAS), connected to the CAS Head-end can then communicate added-value content to the STB over the first communication network.

With reference to FIG. 2, example messages exchanged over a first network FNET, e.g., a 4G network 302, and a second network SNET, e.g., a satellite network 304, to pair the respective encryption modules with each other are described.

At initialization of the 4G network (FNET) connectivity (e.g., during rooftop installation by an installer), the SIM Card (i.e., UICC) installed in a LTE Router uses a preinstalled Applet to communicate to the MME, using e.g. SMS (simple messaging system) communication (Figure 2, step 100). The SIM Card of the first device DEV1 generates and sends a first message (INIT_MESS) to the MME via the first network (FNET). The SIM Card is identified by the 4G Network (to be able to communicate) and at the MME level through the phone number, and/or other available information that uniquely identifies the SIM card. This can be achieved through an identification number contained in the UICC message, or the identification can be done by the CAS OTA through the personal data accompanying the message such as the phone number. A simple message such as "INIT" sent by the SIM Card is then identified within the 4G network since the originating system (SIM Card) adds automatically personal data such as IMSI allowing the MME to uniquely identify the SIM Card.

The MME then generates a unique secret which can be a numerical or an alphanumerical value. The MME can use a secret generator which could be a random number generator.

The unique secret is sent to the first device DEV1 for the SIM Card through the 4G network (FNET) by using a secured communication channel so that the secret is not sent in clear to the SIM (e.g., an admin command through SMS) (Figure 2, step 2).

The Secret is stored in the SIM card of the first device (FDEV).

An acknowledgement (e.g., via the SMS) can be optionally sent in return to the MME to confirm correct reception of the secret.

After the MME has created the secret for the SIM, it can transmit the secret to the CAS Head-End (using the associated CAS account). See figure 2, step 3.

The MME and the CAS Head-End can have different identification system for their subscribers. The MME can uniquely identify the subscriber with a unique identifier (UI-CO) and the CAS Head-End can uniquely identify the subscriber with a unique identifier (UI-CH). In order to determine the UI CH, the MME can send a message containing the secret and identification data of the user such as IMSI or phone number. The CAS Head-End can then search within its database the corresponding unique identification (UI-CH) of the user having this identification data.

According to an embodiment of the invention, the MME can further add information about the device DEV1 requesting the pairing. This information can be the type of device (hand held device or stand alone device) and this information can be used by the CAD Head-end to filter the request. A pairing can be accepted only with a stand-alone device such as the LTE Router and denied if the SIM card in plugged into a mobile device.

According to one embodiment, the LTE Router (or DEV1), before starting the initialization process, can query the Set-top box to obtain its unique identifier (UI-CH). This can be done through the communication channel (not secure at that time) linking the LTE Router with the Set-top box. Then, in the UICC message initiating the pairing, the UI-CH is added so that the MME, while receiving the UICC message can extract the UI-CH. This UI-CH is used when the MME is sending the secret to the CAT Head-End and the UI-CH is added to the message, allowing the CAS Head-End to identify its subscriber. The MME can transmit additional information such as the name of the MME subscriber to check if the identified subscriber (identified with the UI-CH) is authorized to the requested pairing.

The shared secret can be transmitted from CAS Head-End to the identified STB, through the usage of dedicated entitlement management message (EMM), which can be specific per user (using user's key Ku (Figure 2, step 4)). This system enables secure transmission and reception of data set for a specific STB. The data set secured transmission is ensured through encryption and signature managed by the CAS Head-End. Once received the shared secret is managed by the secured elements in the STB (SC or Trusted Environment (NOCS, NASC, NVSR...)), and is stored securely on the device for further usage.

After the shared secret is available on both sides (SIM and SC), a dedicated and secured communication protocol can be instantiated between both elements (Figure 2, step 5), to allow data set transmission from the STB to the SIM card (see SEC CH in figure 1). To achieve this, the SIM card may have a dedicated applet ready on it, to manage the dedicated communication protocol with the STB.

A final acknowledgement can be sent to the MME, to finalize and validate the shared secret correct transmission.

With the shared secret, a strong pairing is then in place between both security modules in the two different networks.

Using the same communication's system (centralized in the MME), the shared secret can be regularly updated (on both sides).

Also, from the initial shared secret (generated at the MME), secondary secrets can be generated locally (SIM and SC) to create session keys, usable for a short period of time, during the communications between SIM and SC.

As the 4G LTE unit may be installed outdoor, it could be possible to get access to the device, sniff the Ethernet cable or replace the USIM with a cloned one. In some embodiments, an application/applet may be implemented in the UICC, managing the secure connection with the SC according to a secure protocol. The UICC may run multiple applications in parallel, one is the USIM for network access, others custom made can be defined according to the UICC standard interfaces.

Some beneficial aspects of pairing include:
- Creating a strong/secure link between CAS world (SC-STB) and 4G (SIM card)
- Enabling an encrypted tunnel in the communication between SIM and SC/STB.
- Managing the protection of data between 4G network - mainly CAS operator's data, like enhanced video content - to the STB. Data on the 4G network will transit encrypted (intrinsically done by the 4G network communications protocols) and are decrypted in the 4G Modem. Thus, without a dedicated system, this data will be transmitted in the clear in the home network.

In some embodiments, data/content is already encrypted for the dedicated end user (CAS End user is identified at the 4G network thought the MME-HSS link (Head-End link), or through the home network pairing, dedicated information can be sent to the 4G operator identifying the CAS AND 4G network user). Thus data can be directly encrypted for the CAS environment before being sent to the user.

In some embodiments, data is encrypted by the 4G network, and is decrypted on the LTE router modem, where a secured VPN is set up from the Modem to the STB, using the pairing. Thus data is not exchanged in clear between LTE modem and STB. Other local network data can stay in clear (e.g., web data requested by a local laptop http session, in the home network)

One advantage of the pairing is that if anybody is exchanging the SIM cards either intentionally or accidentally or is running any other kind of attack it can be detected and the content over the 4G LTE access is not delivered to the set-top box.

Also, one aspect of the technique is to avoid the usage of the 4G SIM Card in a different environment than the 4G + CAS, as created by the pairing.

In case attacks or modifications are detected the set-top box can send a block message to stop content delivery over the compromised network technology (in this case the cellular access).

In some embodiments, the validity of the pairing may be checked on a regular basis. In one beneficial aspect, this check may verify and validate to the 4G network that the SIM card is correctly used as supposed (e.g., in the roof modem). Indeed, such SIM card may be usable directly in a 4G enabled phone, and removing it from the roof modem may be possible. By using regular checks of the protected communication initiated by the STB/SC, the CAS system in the home can validate that the appropriate card is in place and in good use. This check can be regular, or on command, from the CAS Head-End, and may result in immediate status feedback returned to the Head-End, through the 4G Network. If something fails (e.g., SIM card not present), then the feedback can be stored in the STB for future upload (once the network is back online). Such regular or remote monitoring helps having a clear picture of the global network, in a CAS-controlled way. Bad usage of the 4G SIM card could then be quickly identified, not only at the 4G network level, but also CAS level.

Figure 2 is a flow chart representation of a process of pairing a first security module (the SIM Card) connected with a first device (the LTE Router) operable in first communication network (The 4G network) with a second security module (the SC module) connected with a second device (the STB) operable in a second communication network (the Broadcast channel), whereby operation of the first security module is controlled by the second security module.

At 100, an initialization message is sent from the first device through the first communication network to the MME requesting an initialization of the communication with the STB, the initialization message uniquely identifying the first security module.

In the MME, a secret is generated based on the initialization message.

At 101, the secret is sent to the first security module via the first communication network.

At 102, the secret is sent by the MME to the CAD HD, with an identification of the SIM

At 103, the secret is transmitted to the second device via the second communication network and loaded into the second security module (S2).

At 104, using the secret, a secure channel is established between the second security module and the first security module via a third communication link that is different from the first communication network and the second communication network. The third communication link may be, e.g., established as a home area network (wired or wireless) such as a Wi-Fi network or may be a peer-to-peer type communication link, e.g., using wired Ethernet or USB connectivity or using Bluetooth or Wi-Fi peer-to-peer mode.

In some embodiments, the method further includes periodically verifying presence of the first security module in the third communication link, or the communication network across which the third communication link operates, and issuing an error message when the verification fails. It can trig the disabling, upon receiving the error message, operation of the second security module in the second communication network. For that purpose, the message containing the secret sent by the CAS Head-end can further contain the identification (e.g. IMSI) of the first security module. The second security module can then query the first security module to obtain its current IMSI and then compare with the one received while creating the secure channel.

In some disclosed embodiments, a system for providing content over a first communication network and a second communication network includes a first security module (e.g., a SIM card) and a second security module (e.g., a smartcard) operable at a user premise, a first management unit (e.g., MME) operating in the first communication network (e.g., FNET), configured to send an initialization message from the first communication network to the second communication network (e.g., SNET), the initialization message uniquely identifying the first security module, a secret generator (e.g., an encryption key generation server or a software application or a combination of hardware/software) that generates a secret based on the initialization message, an application server that communicates the secret to the first security module via the first communication network, and transmits the secret to the second security module via the second communication network, and causing the second security module to establish, using the secret, a secure channel (e.g., using a IP Sec tunnel, an SSL connection, etc.) between the second security module and the first security module via a third communication link (a peer-to-peer connection as described above, or part of a home area network) that is different from the first communication network and the second communication network.

It will be appreciated that techniques for pairing up two different security modules that use two different encryption technologies for operation in two different networks are disclosed. In one advantageous aspect, one of the security modules, which may be prone for duplication or theft, is logically tethered to the other security module via the pairing. For example, after pairing is successfully performed, the first security module may be usable in a wide area network only when its presence in a local network, such as a home network of a subscriber, or a near field communication network, can be detected and verified by the second security module.

It will further be appreciated that the disclosed techniques may be used to provide a two-way interactive channel for carrying out-of-band value add content to the user and carry user interaction messages to the network can be added to a traditionally one-way network such as a satellite pay television network. The Interactive Application Server (IAS) can send dedicated content intended to a single user and will route the added-content via the MME and the first communication network. The two-way interactive channel may use an off-the-shelf technology such as LTE, but at the same time, protect the equipment from piracy or unauthorized use by securely pairing the cellular receiver with the identity of the satellite pay TV subscriber.

The disclosed and other embodiments, the functional operations and modules described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter affecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A method to create a secure communication channel (SEC_CH) between a first security module (S1) connected to a first device (DEV1) operable in a first communication network (FNET) and a second security module (S2) connected to a second device (DEV2) operable in a second communication network (SNET), the method comprising:
sending an initialization message (INIT_MESS) from the first device (DEV1) through the first communication network (FNET) to a first management unit (MME), the initialization message uniquely identifying the first security module (S1);
generating by the first management unit (MME) a secret based on the initialization message;
transmitting the secret to the first security module (S1) via the first communication network (FNET);
transmitting the secret to a second management unit (CAS HD) connected to the second communication network (SNET);
transmitting the secret to the second device (S2) via the second communication network (SNET),
loading the secret into the second security module (S2), and
establishing, using the secret, the secure channel (SEC_CH) between the second security module (S2) and the first security module (S1) via a third communication (TNET) link that is different from the first communication network (FNET) and the second communication network (SNET), the first security module (S1) being paired with the second security module (S2) by sharing the secret.

2. The method of claim 1 further comprising:
periodically verifying presence of the first security module in the third communication network by the second device; and
issuing an error message when the verification fails.

3. The method of claim 1 or 2, wherein the second communication network is a one-way communication network.

4. The method of any of the claims 1 to 3, wherein the first communication network comprises a cellular network and wherein the first security module comprises a subscriber identity module (SIM).

5. The method of any of the claims 1 to 4, wherein the second communication network comprises a satellite broadcast network.

6. The method of any of the claims 1 to 4, wherein the secret is transmitted to the second management unit with identification of the first security module; said second management module performing a search to determine the identification of the second security module.

7. The method of any of the claims 1 to 6, further comprising:
providing multimedia content over the second communication network; and
providing value-added content related to the multimedia content over the first communication network.

8. The method of claim 2, further comprising:
disabling, upon receiving the error message, operation of the second security module in the second communication network.

9. A system for creating a secure channel between a first security module (S1) connected to a first device (DEV1) operable in a first communication network (FNET) and a second security module (S2) connected to a second device (DEV2) operable in a second communication network (SNET), the system comprising:
the first security module (S1) and a second security module (S2) operable at a user premise;
a first management unit (MME) in the first communication network, configured to receive an initialization message via the first communication network from the first security module (S1), the initialization message uniquely identifying the first security module (S1);
a secret generator at the first management unit (MME) that generates a secret based on the initialization message;
the first management unit (MME) further being configured to communicate the secret to the first security module via the first communication network; and to transmit the secret to a second management unit (CAD HD) connected to the second communication network (SNET);
the second management unit (CAD HD) being configured to send the secret to the second security module (S2) via the second communication network (SNET); and
causing the second security module (S2) to establish, using the secret, a secure channel between the second security module (S2) and the first security module (S1) via a third communication link (TNET) that is different from the first communication network (FNET) and the second communication network (SNET), the first security module (S1) being paired with the second security module (S2) by sharing the secret.

10. The system of claim 9, wherein the second security module is further configured to:
periodically verifying presence of the first security module via the third communication link; and
issuing an error message when the verification fails.

11. The system of claim 9 or 10, wherein the second communication network is a one-way communication network.

12. The system of any of the claims 9 to 11, wherein the first communication network comprises a cellular network and wherein the first security module comprises a subscriber identity module.

13. The system of any of the claims 9 to 12, wherein the second communication network comprises a satellite broadcast network.

14. The system of any of the claims 9 to 13, wherein the third communication link comprises a user premises network.

15. The system of any of the claims 9 to 14, further comprising:
a head-end that provides multimedia content over the second communication network; and
an interactive application server that provides value-added content related to the multimedia content over the first communication network.

16. The system of claim 10, wherein the first communication network comprises a authentication server that disables, upon receiving the error message, operation of the second security module in the second communication network.

## Patentansprüche

1. Verfahren zur Schaffung eines gesicherten Nachrichtenübertragungskanals (SEC_CH) zwischen einem ersten Sicherheitsmodul (S1), das mit einer ersten Vorrichtung (DEV1) verbunden ist, die in einem ersten Kommunikationsnetz (FNET) arbeitet, und einem zweiten Sicherheitsmodul (S2), das mit einer zweiten Vorrichtung (DEV2) verbunden ist, die in einem zweiten Kommunikationsnetz (SNET) arbeitet, wobei das Verfahren folgendes umfasst:
Senden einer Initialisierungsnachricht (INIT_MESS) von der ersten Vorrichtung (DEV1) über das erste Kommunikationsnetz (FNET) an eine erste Verwaltungseinheit (MME), wobei die Initialisierungsnachricht nur das erste Sicherheitsmodul (S1) identifiziert;
Erzeugung, durch die erste Verwaltungseinheit (MME), eines Geheimnisses, das auf der Initialisierungsnachricht basiert;
Übertragung des Geheimnisses an das erste Sicherheitsmodul (S1) über das erste Kommunikationsnetz (FNET);
Übertragung des Geheimnisses an eine zweite Verwaltungseinheit (CAS HD), die mit dem zweiten Kommunikationsnetz (SNET) verbunden ist;
Übertragung des Geheimnisses an die zweite Vorrichtung (S2) über das zweite Kommunikationsnetz (SNET),
Laden des Geheimnisses in das zweite Sicherheitsmodul (S2), und
Etablierung, unter Benutzung des Geheimnisses, des gesicherten Kanals (SEC_CH) zwischen dem zweiten Sicherheitsmodul (S2) und dem ersten Sicherheitsmodul (S1) über eine dritte Kommunikationsverbindung (TNET), die von dem ersten Kommunikationsnetz (FNET) und dem zweiten Kommunikationsnetz (SNET) verschieden ist, wobei das erste Sicherheitsmodul (S1) mit dem zweiten Sicherheitsmodul (S2) unter Teilung des Geheimnisses verbunden ist.

2. Verfahren nach Anspruch 1, das außerdem folgendes umfasst:
die periodische Prüfung des Vorhandenseins des ersten Sicherheitsmoduls in dem dritten Kommunikationsnetz durch die zweite Vorrichtung; und
die Ausgabe einer Fehlermeldung, wenn die Prüfung fehlschlägt.

3. Verfahren nach Anspruch 1 oder 2, wobei das zweite Kommunikationsnetz ein unidirektionales Kommunikationsnetz ist.

4. Verfahren nach einem beliebigen der Ansprüche 1 bis 3, wobei das erste Kommunikationsnetz ein Mobilnetz umfasst und wobei das erste Sicherheitsmodul ein Teilnehmeridentitätsmodul (SIM) umfasst.

5. Verfahren nach einem beliebigen der Ansprüche 1 bis 4, wobei das zweite Kommunikationsnetz ein Satellitennetz umfasst.

6. Verfahren nach einem beliebigen der Ansprüche 1 bis 4, wobei das Geheimnis an die zweiten Verwaltungseinheit mit Identifizierung des ersten Sicherheitsmoduls übertragen wird; die zweite Verwaltungsmodul führt eine Suche durch, um die Identifizierung des zweiten Sicherheitsmoduls zu bestimmen.

7. Verfahren nach einem beliebigen der Ansprüche 1 bis 6, das außerdem folgendes umfasst:
die Lieferung von Multimedia-Inhalt über das zweite Kommunikationsnetz; und
die Lieferung von höherwertige Inhalten, die mit dem Multimediainhalt über das erste Kommunikationsnetz verbunden sind.

8. Verfahren nach Anspruch 2, das außerdem folgendes umfasst:
die Stilllegung, nach dem Empfang der Fehlermeldung, des Betriebs des zweiten Sicherheitsmoduls in dem zweiten Kommunikationsnetz.

9. System zur Schaffung eines gesicherten Kanals zwischen einem ersten Sicherheitsmodul (S1), das mit einer ersten Vorrichtung (DEV1) verbunden ist, die in einem ersten Kommunikationsnetz (FNET) arbeitet, und einem zweiten Sicherheitsmodul (S2), das mit einer zweiten Vorrichtung (DEV2) verbunden ist, die in einem zweiten Kommunikationsnetz (SNET) arbeitet, wobei das System folgendes umfasst:
das erste Sicherheitsmodul (S1) und ein zweites Sicherheitsmodul (S2), das in einer Anlage des Benutzers arbeitet;
eine erste Verwaltungseinheit (MME) in dem ersten Kommunikationsnetz, konfiguriert um über das erste Kommunikationsnetz des ersten Sicherheitsmoduls (S1) eine Initialisierungsnachricht zu empfangen, wobei die Initialisierungsnachricht nur das erste Sicherheitsmodul (S1) identifiziert;
einen Generator von Geheimnissen in der ersten Verwaltungseinheit (MME), der ein Geheimnis, basierend auf der Initialisierungsnachricht, produziert;
wobei die erste Verwaltungseinheit (MME) außerdem konfiguriert ist, um dem ersten Sicherheitsmodul über das erste Kommunikationsnetz das Geheimnis mitzuteilen; und um das Geheimnis an eine zweite Verwaltungseinheit (CAD HD) zu übertragen, die mit dem zweiten Kommunikationsnetz (SNET) verbunden ist;
wobei die zweite Verwaltungseinheit (CAD HD) konfiguriert ist, um das Geheimnis über das zweite Kommunikationsnetz (SNET) an das zweite Sicherheitsmodul (S2) zu senden; und
dafür sorgt, dass das zweite Sicherheitsmodul (S2), durch Benutzung des Geheimnisses, einen gesicherten Kanal zwischen dem zweiten Sicherheitsmodul (S2) und dem erste Sicherheitsmodul (S1) über eine dritte Kommunikations-Verbindung (TNET) etabliert, die von dem ersten Kommunikationsnetz (FNET) und dem zweiten Kommunikationsnetz (SNET) verschieden ist, wobei das erste Sicherheitsmodul (S1) mit dem zweiten Sicherheitsmodul (S2) durch das Teilen des Geheimnisses verbunden ist.

10. System nach Anspruch 9, wobei das zweite Sicherheitsmodul außerdem konfiguriert ist, um:
regelmäßig über die dritte Kommunikationsverbindung das Vorhandensein des ersten Sicherheitsmoduls zu prüfen; und
eine Fehlermeldung abzugeben, wenn die Prüfung fehlschlägt.

11. System nach Anspruch 9 oder 10, wobei das zweite Kommunikationsnetz ein unidirektionales Kommunikationsnetz ist.

12. System nach einem beliebigen der Ansprüche 9 bis 11, wobei das erste Kommunikationsnetz ein Mobilnetz umfasst und das erste Sicherheitsmodul ein Teilnehmeridentitätsmodul umfasst.

13. System nach einem beliebigen der Ansprüche 9 bis 12, wobei das zweite Kommunikationsnetz ein Satellitennetz umfasst.

14. System nach einem beliebigen der Ansprüche 9 bis 13, wobei die dritte Kommunikationsverbindung ein Netz der Anlagen des Benutzers umfasst.

15. System nach einem beliebigen der Ansprüche 9 bis 14, das außerdem folgendes umfasst:
eine Kopfstation, die Multimediainhalt über das zweite Kommunikationsnetz liefert; und
einen interaktiven Anwendungsserver, der höherwertige Inhalte liefert, die mit dem Multimediainhalt über das erste Kommunikationsnetz verbunden sind.

16. System nach Anspruch 10, wo das erste Kommunikationsnetz einen Authentifizierungsserver umfasst, der nach dem Empfang der Fehlermeldung den Betrieb des zweiten Sicherheitsmoduls in dem zweiten Kommunikationsnetz stilllegt.

## Revendications

1. Méthode pour créer un canal de communication sécurisé (SEC_CH) entre un premier module de sécurité (S1) connecté à un premier dispositif (DEV1) opérationnel dans un premier réseau de communication (FNET) et un deuxième module de sécurité (S2) connecté à un deuxième dispositif (DEV2) opérationnel dans un deuxième réseau de communication (SNET), la méthode comprenant:
l'envoi d'un message d'initialisation (INIT_MESS) du premier dispositif (DEV1) à travers le premier réseau de communication (FNET) à une première unité de gestion (MME), le message d'initialisation identifiant uniquement le premier module de sécurité (S1);
la génération par la première unité de gestion (MME) d'un secret basé sur le message d'initialisation;
la transmission du secret au premier module de sécurité (S1) via le premier réseau de communication (FNET);
la transmission du secret à une deuxième unité de gestion (CAS HD) connectée au deuxième réseau de communication (SNET);
la transmission du secret au deuxième dispositif (S2) via le deuxième réseau de communication (SNET),
le chargement du secret dans le deuxième module de sécurité (S2), et
l'établissement, utilisant le secret, du canal sécurisé (SEC_CH) entre le deuxième module de sécurité (S2) et le premier module de sécurité (S1) via un troisième lien de communication (TNET) qui est différent du premier réseau de communication (FNET) et du deuxième réseau de communication (SNET), le premier module de sécurité (S1) étant associé avec le deuxième module de sécurité (S2) en partageant le secret.

2. Méthode de la revendication 1 comprenant en outre:
la vérification périodique de la présence du premier module de sécurité dans le troisième réseau de communication par le deuxième dispositif; et
l'émission d'un message d'erreur quand la vérification échoue.

3. Méthode de la revendication 1 ou 2, où le deuxième réseau de communication est un réseau de communication unidirectionnel.

4. Méthode de l'une quelconque des revendications 1 à 3, où le premier réseau de communication comprend un réseau cellulaire et où le premier module de sécurité comprend un module d'identité d'abonné (SIM).

5. Méthode de l'une quelconque des revendications 1 à 4, où le deuxième réseau de communication comprend un réseau de diffusion par satellite.

6. Méthode de l'une quelconque des revendications 1 à 4, où le secret est transmis à la deuxième unité de gestion avec identification du premier module de sécurité; ledit deuxième module de gestion accomplissant une recherche pour déterminer l'identification du deuxième module de sécurité.

7. Méthode de l'une quelconque des revendications 1 à 6, comprenant en outre:
la fourniture de contenu multimédia sur le deuxième réseau de communication; et
la fourniture de contenu à valeur ajoutée lié au contenu multimédia sur le premier réseau de communication.

8. Méthode de la revendication 2, comprenant en outre:
la désactivation, suite à la réception du message d'erreur, de l'opération du deuxième module de sécurité dans le deuxième réseau de communication.

9. Système pour créer un canal sécurisé entre un premier module de sécurité (S1) connecté à un premier dispositif (DEV1) opérationnel dans un premier réseau de communication (FNET) et un deuxième module de sécurité (S2) connecté à un deuxième dispositif (DEV2) opérationnel dans un deuxième réseau de communication (SNET), le système comprenant:
le premier module de sécurité (S1) et un deuxième module de sécurité (S2) opérationnel dans une installation de l'utilisateur;
une première unité de gestion (MME) dans le premier réseau de communication, configurée pour recevoir un message d'initialisation via le premier réseau de communication du premier module de sécurité (S1), le message d'initialisation identifiant uniquement le premier module de sécurité (S1);
un générateur de secrets dans la première unité de gestion (MME) qui génère un secret basé sur le message d'initialisation;
la première unité de gestion (MME) étant configurée en outre pour communiquer le secret au premier module de sécurité via le premier réseau de communication; et pour transmettre le secret à une deuxième unité de gestion (CAD HD) connectée au deuxième réseau de communication (SNET);
la deuxième unité de gestion (CAD HD) étant configurée pour envoyer le secret au deuxième module de sécurité (S2) via le deuxième réseau de communication (SNET); et
causant l'établissement par le deuxième module de sécurité (S2), utilisant le secret, d'un canal sécurisé entre le deuxième module de sécurité (S2) et le premier module de sécurité (S1) via un troisième lien de communication (TNET) qui est différent du premier réseau de communication (FNET) et du deuxième réseau de communication (SNET), le premier module de sécurité (S1) étant associé avec le deuxième module de sécurité (S2) en partageant le secret.

10. Système de la revendication 9, où le deuxième module de sécurité est configuré en outre pour:
vérifier périodiquement la présence du premier module de sécurité via le troisième lien de communication; et
émettre un message d'erreur quand la vérification échoue.

11. Système de la revendication 9 ou 10, où le deuxième réseau de communication est un réseau de communication unidirectionnel.

12. Système de l'une quelconque des revendications 9 à 11, où le premier réseau de communication comprend un réseau cellulaire et où le premier module de sécurité comprend un module d'identité d'abonné.

13. Système de l'une quelconque des revendications 9 à 12, où le deuxième réseau de communication comprend un réseau de diffusion par satellite.

14. Système de l'une quelconque des revendications 9 à 13, où le troisième lien de communication comprend un réseau d'installations de l'utilisateur.

15. Système de l'une quelconque des revendications 9 à 14, comprenant en outre:
une tête de réseau qui fournit du contenu multimédia sur le deuxième réseau de communication; et
un serveur d'application interactive qui fournit du contenu à valeur ajoutée lié au contenu multimédia sur le premier réseau de communication.

16. Système de la revendication 10, où le premier réseau de communication comprend un serveur d'authentification qui désactive, suite à la réception du message d'erreur, l'opération du deuxième module de sécurité dans le deuxième réseau de communication.
